# EUROPEAN PATENT APPLICATION

(11) **EP 4 023 842 A2**
(43) Date of publication of application: **06.07.2022**
(21) Application number: 21020656.1
(22) Date of filing: 28.12.2021
(51) Int. Cl.: E05B 29/00, B62H 5/10

(54) **LOCKING DEVICE FOR A BICYCLE**

(30) Priority: 30.12.2020 SE 2030379
(71) Applicant: Andersson, Conny, 59558 Mantorp (SE)
(72) Inventor: Andersson, Conny, 59558 Mantorp (SE)
(74) Representative: Bergenstråhle & Partners AB

(57) **Abstract**

Locking device for a bicycle having a frame consisting of tubes 1, 2 where at least one of the tubes 1 has a tube end 1b connected to a housing 3 containing a shaft 14 with which the bicycle is operated, and wherein in said tube 1 a locking pin 8 is positioned at the tube end 1b so that the locking pin can be brought from a retracted unlocked position, where the locking pin 8 is positioned fully inside the tube end 1b, and a protruding position, where the locking pin 8 partly extends into said housing 3, whereby the locking pin in the protruding position is inserted into a hole 15 in said drive shaft 14, whereby the bicycle through this protruding position of the locking pin 8 is locked by the fact that the bicycle cannot be operated by means of that shaft 14, where the locking device includes a mechanical or an electrical unit for operating the lock.

## Description

### Technical field

The present invention relates to a locking device for a bicycle.

### State of technology

Theft and the illegal use of bicycles are an increasing problem in society. For a long time, it has been common practice to provide bicycles with locks that in the locked position have some detail that intervenes in the plane of the wheel close to its outer cassette, for example with a locking pin that extends between the spokes of a wheel so that the bicycle cannot be used. Another way is to attach the bicycle with a chain or a cable to any fixed object close to the bicycle.

However, bicycle thefts have been practiced by well-equipped individuals, thieves, who with the help of specific tools cut off locking pins, cables and chains with which bicycles are locked, after which the lock can be removed. The bicycles can then be used by the thief or sold to interested speculators.

The document EP 0156416 shows a lock for a bicycle, where a locking pin is located in a tube next to the housing that encloses the pedal shaft of the bicycle. This locking pin can be inserted into a hole in the pedal shaft by means of a key lock arranged on the tube, where a key when twisting inserts the locking pin into the hole and thereby locking the pedal shaft, after which the bicycle can no longer be moved forward by means of the pedals on the pedal shaft. There is a clear inconvenience with this solution. The cylinder that the key turns in this type of lock can be turned around with tools other than the key itself, such as a screwdriver or the like, whereby the lock is not adequately protected against interference.

### Summary of invention

According to one aspect of the invention, it comprises a locking device for a bicycle which has a frame consisting of tubes, where at least one of the tubes has an end connected to a housing containing a shaft with which the bicycle is operated, and wherein in said tube end a locking pin is positioned, so that the locking pin can be brought from a retracted unlocked position, where the locking pin is fully positioned inside the tube end, and a protruding position where the locking pin partly extends into said housing, whereby the locking pin in the protruding position is inserted into a hole in said drive shaft, whereby the bicycle in this protruding position of the locking pin is locked through the fact that the bicycle cannot be operated by that shaft, where the locking device is brought to a locked position by means of one of the alternatives:
a) the locking pin is in the retracted position inside a locking sleeve maintained in a unlocked position of the locking device, where the locking pin is fixed by means of a number of code washers holding the locking pin in the unlocked position, and where the locking device is brought to a locked position when the code washers are moved to a for each code washer predetermined position, where the locking pin is freely moving in its axial joint in relation to the code washers, after which the locking pin is shifted to a locked position by means of a locking control,
b) the locking pin is connected to a locking shaft of a solenoid in a locking sleeve arranged at the end of the frame tube connecting to the housing, where in a first variant the solenoid, when an electrical voltage is applied to it, has brought the locking pin to the locked position or unlocked position depending on the polarity of the voltage applied, and where in a second variant the locking pin is arranged to be brought to the locked position by a compression spring of the solenoid, which automatically pushes the locking pin into the drive shaft's hole, when a locking rod of the locking sleeve is pressed, and in the other variant the locking pin is arranged to be brought to the unlocked position by pulling the locking pin out of the drive shaft by pressing the locking rod and applying a voltage to the solenoid.

In the case of the first alternative (a) for locking a bicycle with the locking device, referred to in the following as bicycle lock, it consists of a code lock, where the codes for unlocked or locked position respectively are applied with a code washer arranged in a locking sleeve. This locking sleeve is fixed at the end of the tube in the bicycle frame that connects to the housing of the drive shaft. The locking sleeve is appropriately shaped like a cylinder that encloses part of the tube end. In the locking sleeve, a number of flat code washers are arranged parallel to each other and alongside each other in the longitudinal direction of the frame tube. These code washers have first ends that stick out through a first opening in the locking sleeve, where these first ends in a normal position stand out so far outside of the locking sleeve shell that each first end of the code washers is in the same plane. Each code washer is shiftable across the length of the locking sleeve and when a code washer is shifted from the normal position inwards towards the inside of the locking sleeve, its other end protrudes at a second opening located diametrically in relation to the first opening. The code washers are further spring loaded so that they return to their normal position when not pressed by any impacting force.

The code washers are identical in their external dimensions and are designed with a consistently placed longitudinal hole in the central part of the code washer. The longitudinal hole is in each code washer equipped with an extension where this extension has a circular scope, which means that a circularly shaped shaft can run freely inside and across this extension. The longitudinal holes have the same widening across except for said extension of the respective code washer. The extension of the longitudinal hole is here called the circular hole. These circular holes of the code washers included in the code lock are shifted a certain distance along the longitudinal hole, so that their length differ from each other by said distance. This distance can be, for example, 2 mm. If, for example, the code lock includes 7 different code washers, the circular holes will have a reciprocal displacement across the length of the locking sleeve by 2 mm relative to each other, which means that it is not possible to shift a circular shaft through the circular holes in the code washers. However, if each code washer is pressed down at its first end with a distance that brings the circular holes for each code washer in line with each other, a road in the axial row is opened through the locking sleeve of a shaft in the form of a locking pin that has essentially the same diameter as the holes in the code washers. With the same diameter included tolerance, so that the locking pin can run freely.

Inside the locking sleeve, the locking pin is placed through the longitudinal holes of the code washers. This is possible by the locking pin having a circularly arranged groove around its circumference at each position, where a code washer is stationed. The circular grooves have a diameter that is essentially the same as the width of the longitudinal holes in the code washers also here with tolerance, so that the code washers can run freely across the locking pin, i.e., shifted between their two end positions. When, for example, 7 code washers are used in the code lock, each code tag can be shifted in 7 different modes in relation to the other code tags. This creates a code for how the code washers are to be set so that the locking pin through these can be moved axially. When using 6 code washers that can be set in 7 different positions, a very large number, greater than 800 000, is created for variants of the setting of the code washers, i.e., codes for how these should be set to allow free movement of the locking pin, i.e., create a neutral for this. The locking pin may, when the circular holes in the code washers are aligned with each other and creating neutral, be shifted by means of a control accessible from the outside of the locking sleeve, whereby the locking pin can be pushed into the hole in the drive shaft of the bicycle by means of the control. The code is mechanical, i.e., dependent on the positions of the respective code washer, and does not include any number code, whereby it is almost impossible to manually set the code washers to positions according to the code set for the respective bicycle lock to open it.

When a specific lock is created, the desired number of code washers is picked out at random and placed parallel to each other in the locking sleeve along the existing grooves in the locking pin. In order for the lock to be able to be controlled between the locked and unlocked position, a corresponding number of slats are picked out, where these slats have a length corresponding to each of the selected code washers. By placing these picked-out slats and placing them in a row in a code key, where each slat is placed in a position corresponding to the position of its corresponding code washer in the lock sleeve, the bicycle lock can be brought to neutral. The length of each slat is arranged so that the corresponding code washer can be pressed down by means of the code key and thus bring each code washer to a position where the circular holes in the code washers are aligned with each other and thus create the neutral position for the locking pin that makes it possible to shift it partly into the drive shaft when locking and to bring the locking pin back to the starting position free of the drive shaft; i.e. placed entirely in the frame tube where the locking sleeve is set up.

At the second alternative b) for locking a bicycle with the locking device, the locking pin is stored inside an elongated solenoid arranged at the end of the frame tube connecting to the housing enclosing the drive shaft of the bicycle. The solenoid is set up in the longitudinal axis of said tube. The locking pin can be shifted by means of a voltage that is placed over the solenoid so that it, with magnetic influence, pulls the locking pin to a position unlocked for the locking device, where the entire locking pin is inside the frame tube. By placing a voltage with the opposite polarity over the solenoid, the solenoid moves the locking pin axially to a position where an end of the locking pin is pushed into a hole in the drive shaft of the bicycle. The drive shaft can be equipped with two perpendicular to each other set holes that can receive the locking pin. Furthermore, it is natural that the drive shaft must be rotated to a position where a hole in the drive shaft is lined with the longitudinal axis of the locking pin. When the solenoid is without an applied voltage, the locking pin is kept in the last determined position by, for example, the locking pin being spring loaded.

### Description of drawings

**Figure 1** schematically shows a sketch of the locking device according to an first aspect of the invention, which consists of a code lock in a frame tube connected to a drive shaft housing for a bicycle. Here the lock is shown in unlocked mode.
**Figure 2** illustrates the schematic perspective view of the device as shown in Figure 1, where the lock shows a locking pin in the lock at a locked position.
**Figure 3** shows the locking pin in the lock as shown in Figure 1.
**Figure 4** reproduces 7 code washers with their circular holes and how these are offset relative to each other in the longitudinal holes in the code washers. The lower part of Figure 7 shows the slats arranged to be set up in a code key, where the size of the slats is reproduced here with their length corresponding to the code washers they are intended to control.
**Figure 5** shows a code key with 6 slats of different lengths built into the code key.
**Figure 6** shows the central part of a drive shaft for the bicycle, where it has two perpendicular to each other set holes to receive the locking pin when locking, whereby in the displayed position a locking pin is partly inserted into the drive shaft.
**Figure 7** schematically shows a sketch of the locking device according to the second inventive aspect, where this consists of a coil that a voltage is applied to to shift the locking pin in or out of a hole in the drive shaft depending on the polarity of the voltage. Here, the lock is shown in an exploded sketch where the locking pin is in the locked position.
**Figure 8** shows a locking sleeve affixed at the end of the tube in the bicycle frame that connects to the housing for the drive shaft. The locking sleeve is appropriately shaped like a cylinder that encloses part of the frame tube and where the locking sleeve further encloses the coil and electronics for controlling the movement of the locking pin.
**Figure 9** specifies a wiring diagram for connecting an electric key for the opening and locking of the locking device according to the second inventive aspect.
**Figures 10 and 11** show a solenoid arranged in the locking sleeve for use in the second variant of feeding the locking pin between the locked and unlocked position, where the solenoid is supplied with a voltage with only one polarity.

### Description of embodiments

The following describes a number of embodiments of the invention according to the attached drawings. The drawings show only a schematic principle of the device and do not claim to show any proportions between different elements of it in scale.

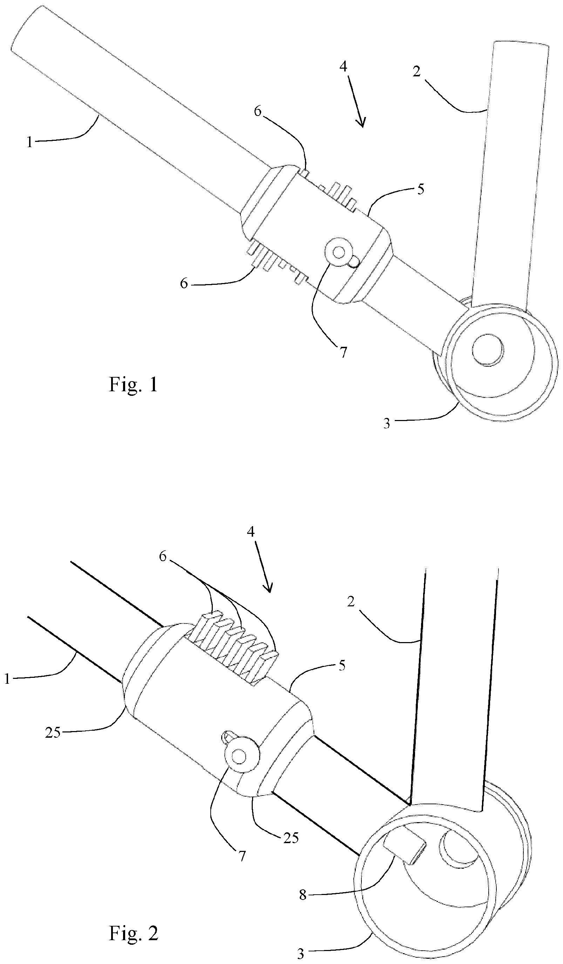

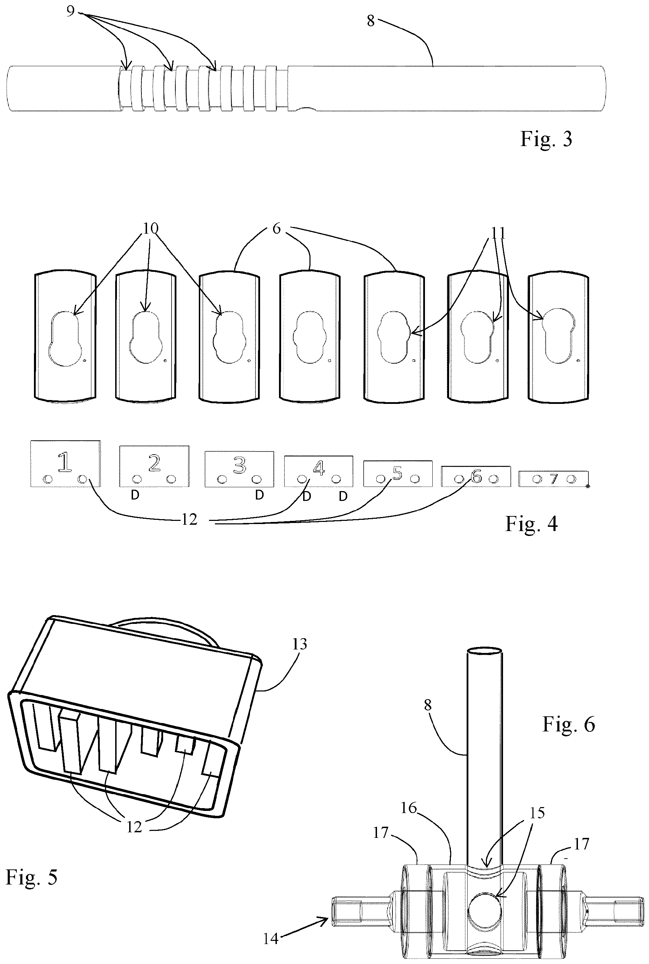

Here, a first embodiment of a device is reported according to the invention. Figure 1 shows a central part of a bicycle in the form of a first frame tube 1 and a second frame tube 2. Both of these are connected, e.g., by welding, to a housing 3 which is intended to house a drive shaft (see Fig. 6) for the propulsion of the bicycle. In the first frame tube 1, a code lock 4 is set up. This code lock is illustrated here in the unlocked position, i.e., the locking pin is fully retracted into the frame tube 1. Around the frame tube 1 a locking sleeve 5 is arranged. This locking sleeve shows six code washers 3 that are movable across the locking sleeve 5. In the displayed mode, the code washers are pressed down with distances according to the code that applies to this code lock. In this position, the locking pin is laid out and can be moved axially inside the frame tube. This allows the locking pin to be inserted with its end into the locking sleeve and into a hole in the drive shaft, where it is normally located. The drive shaft does not appear in the Figure.

Figure 2 renders the same code lock as in Figure 1, but here the locking pin 8 is offset into the lock sleeve 3. It is also apparent from Figure 2 that the code washers 6 sprung out from a position of rest for these, whereby the bicycle lock is activated as the locking pin 8 cannot be brought back into the frame tube 1 with the control 7 without the use of a code key, that is placed against the code washers 6 and brings them to the position, where the locking pin 8 can be freely passed back through the circular holes in the code washers to bring these to line.

Figure 3 shows the locking pin 8 where circular grooves 9 are arranged along each other along the locking pin. These grooves are set up to position the code washers 6 in these groves and be movable along the grooves across the locking pin 8.

A code lock according to the invention can be carried out with the desired number of code washers 6. When used in a code lock using seven code washers, these will show seven different shapes as shown in Figure 4. Outwardly, the code washers are identical, but in their central part, an oblong longitudinal hole 10 is established in each of them. These longitudinal holes are placed in the identical position for each code washer. The code washers are placed around the locking pin 8 and placed in grooves 9 and can be moved along the grooves 9, where the edges of the longitudinal holes 10 then slide in grooves 9. As mentioned, extensions in the form of circular holes 11 are occupied in the longitudinal holes 10. These circular holes 11 are offset a predetermined distance, such as 2 mm, apart along the longitudinal holes 10, as shown in Figure 4. In this way, the code washers can be set in seven different predetermined positions in relation to each other, so that the circular holes 11 are aligned with each other, whereby the locking pin 8 can be placed in its neutral position and be movable axially inside the code lock. Code washers 6 are set up to springy return to a position of rest outwards from lock pin 8.

Since seven code washers are used, for example, the number of combinations where these can each be set in one of seven different positions across the locking pin 8 to lock or unlock the bicycle lock will be very large. To push down code washers 6 by hand to set the code is close to impossible. Instead, a code key is used as shown in Figure 5. Here, then, is an equal number of slats 12, in the example seven pieces (in the figure shown for a variant with six code washers and six slats) arranged parallel to each other inside a box 13. The slats have different lengths, as shown in Figure 4, where each slat 12 has a length of the corresponding code washer longitudinally corresponding to the distance that the code washer must be shifted from its position of rest to push its counterpart down to the position that brings this code washer to the fulfilled unlock mode.

Figure 6 shows an example of a drive shaft where the locking pin 8 is inserted with its end in one of the drive shaft's holes 15. The coarser cylindrical part 16 of the drive shaft is intended to be stored by means of wheel bearing 17 inside housing 3 at frame tube 1.

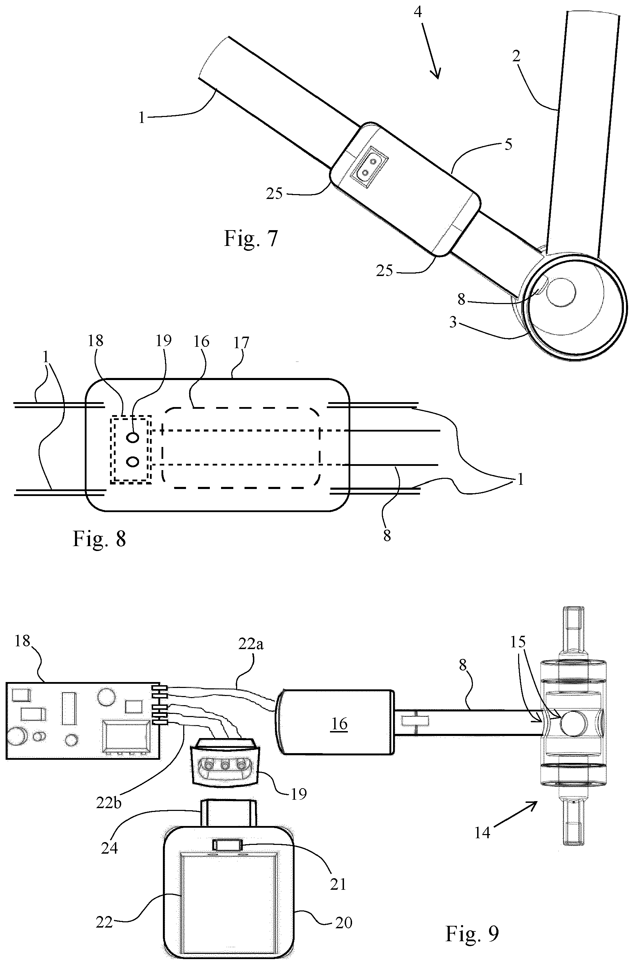

Figure 7 shows a central part of a cycle in the form of a first frame tube 1 and a second frame tube 2. Both of these are connected, e.g., by welding, to a housing 3 intended to house a drive shaft 14 (see Fig. 9) for the propulsion of the bicycle. In the first frame tube 1, an electrically operated bicycle lock 15 is set up. In the case of the second alternative b) for locking a bicycle with the locking device, which is also in the case referred to as bicycle lock, this is according to a first alternative of a lock, where a solenoid 16 is used to shift the locking pin 8 in or out of the drive shaft of the bicycle 14. Here, too, a locking sleeve 17 arranged around the ends of the frame tube 1 against which ends the locking sleeve is adjacent. The solenoid 16 is located inside the locking sleeve in its longitudinal direction. The locking sleeve 17 is affixed at the end of the tube 1 in the bicycle frame that connects to the housing for the drive shaft. The locking sleeve 17 is appropriately shaped like a hollow cylinder that encloses and atones two parts of the frame tube 1.

The locking pin 8 is stored axially inside the solenoid 16 and connects with one end to the edge of the housing 3 when the bicycle lock is unlocked. When locking the bicycle lock, the solenoid 16 pulls the locking pin 8 towards the housing 3, where the drive shaft is located and will thereby penetrate with its said one end into a hole in the drive shaft 14, so that the locking pin 8 locks the bicycle lock, so that the bicycle cannot be pushed forward.

Inside the locking sleeve is also a microchip 18 and a first contact member 19 to which an electrical key 20 can be connected. Microchip 18 contains electronics for decoding a code stored in the electrical key 20. When microchip 18 reads a code in the electrical key that matches a code with which the microchip has been supplied for the right to operate the bicycle lock, the microchip controls the application of voltage from the electrical key 20 with a polarity set by the position of a switch 21 on the electrical key. Transmission of voltage from the microchip to solenoid 16 occurs by cables 22a. Transmission of voltage and code information is made by means of cables 22b.

The electric key 20 has a battery 23 stored inside the electrical key housing. The energy from this battery 23 has the voltage required to energize the solenoid 16, so that it has the power to shift the locking pin 8 in or out of the drive shaft 14. As mentioned, the electric key 20 is provided with a code stored in an electronic circuit in the electrical key. Codes in electrical keys to different bicycle locks can be varied in very large numbers. The electrical key 20 is equipped with a second contact member 24 corresponding to the first contact member 19 so that electrical key 20 and microchip 18 can contact each other. The change of the bicycle lock between the locked and unlocked position by means of the electrical key 20, when connected to the first contact member 19, is made by means of the switch 21, which thereby switches the polarity of the voltage brought to the solenoid. The electrical key 20 is connected to the bicycle lock after connection by wire to the contact member 19 and thus the code sent from the power key 20 to the microchip 18 cannot be read by unauthorized persons at a distance, as may be the case in wireless transmission. The electronic code is fabricated during factory manufacturing and is not specified as a number code for a user of the bicycle lock. In the embodiment's example, the code includes 38 digits.

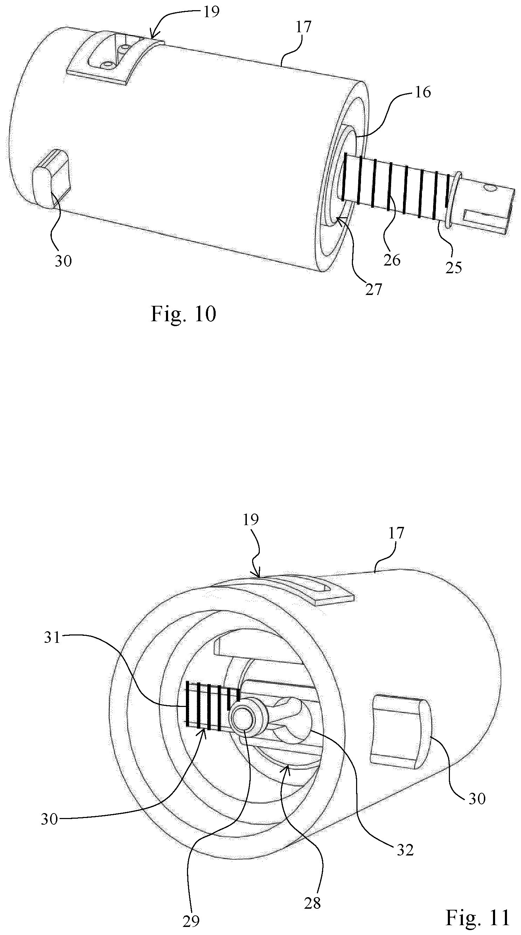

A preferred second variant of the bicycle lock at the alternative of using solenoid is described with reference to Figures 10 and 11. Here, it is illustrated that the solenoid 16 in the lock sleeve 17 has a locking shaft 25 that in the bicycle lock is connected to the locking pin 8. In the locked position, the locking shaft 25 has pushed the locking pin 8 into the drive shaft 14 by pushing a spring 26 out of the locking shaft to an external position, where the locking pin is pushed into one of the holes 15 in the drive shaft of the bicycle. The spring 26 is a pressure spring arranged around the front end of the locking shaft where it protrudes at the first end 27 of the solenoid.

At a second end 28 of the solenoid, the locking shaft 25 at its rear end is equipped with an end stop 29. Inside end stop 29 is a locking rod 30 which, during a position of rest, is pressed in by a locking spring 31 towards the rear end of the locking shaft inside the end stop 29, whereby the locking shaft cannot be carried outwards from the solenoid and lock the bicycle inadvertently by not allowing the end stop 29 to be passed past the locking rod 30. Locking is simply done by pressing the locking rod 30.

To unlock the bicycle lock, i.e., to pull back the locking shaft 25, so that it pulls with the attached locking pin 8 out of the drive shaft using magnetic force from the solenoid, the locking rod 30 is held down. Then the electrical key 20 is inserted into the first contact member 19, thereby 16 the solenoid 16 is energized. The solenoid and microchip are thus energized and activated. The locking shaft 25 is pulled back with magnetic force and bring the locking pin 8 out of the drive shaft 14. The locking rod is then released so that the end stop 29 passed through an opening 32 in the bar 30, when the locking shaft is retracted, holds the locking shaft in a fixed position by inserting the locking spring 31 inside the locking rod inside the end stop 29. The electrical key 20 can then be removed from the first contact member and the bicycle lock is unlocked.

When the microchip 18 in the case of the preferred embodiment, the code is read in the electrical key if it matches a code with which the microchip has been supplied with for the right to operate the bicycle lock, the microchip only controls the application of voltage from the electrical key 20 without regard to polarity as opposed to the design previously described.

When the bicycle is to be locked, the pedals are set in the correct position (e.g., vertically) and when the locking rod is pressed, the locking shaft returns to the locked position. The electrical key is always removed from the first contact member immediately after locking/unlocking.

The locking sleeve 5, 17 mentioned in both embodiments includes at either end an end sleeve 25. In an embodiment, the end sleeves 25 are attached to the locking sleeve 5 respectively 17, fastened by grooves. When joining the locking sleeve 5, 17 with the frame tube 1, this is carried out by pressing the frame tubes 1 from either side of the locking sleeve against the two end sleeves 25, after which the frame tubes 1 are welded to the end sleeves 25 around the edge where the frame tube and end sleeve meet.

Inside the locking sleeve is also a microchip 18 and a first contact member 19 to which an electrical key 20 can be connected. Microchip 18 contains electronics for decoding a code stored in the electrical key 20. When microchip 18 reads a code in the electrical key that matches a code with which the microchip is supplied for the right to operate the bicycle lock, the microchip controls the application of voltage from the electrical key 20 with a polarity set by the position of a switch 21 on the electrical key. Transmission of voltage from the microchip to solenoid 16 occurs by cables 22a. Transmission of voltage and code information is made by means of cables 22b.

## Claims

1. Locking device for a bicycle having a frame consisting of tubes (1, 2), where at least one of the tubes (1) has a tube end (1b) connected to a housing (3) containing a shaft (14) with which the bicycle is operated, and wherein in said tube (1) a locking pin (8) is positioned at the tube end (1b), so that the locking pin can be brought from a retracted unlocked position, where the locking pin (8) is positioned fully inside the tube end (1b), and a protruding position where the locking pin (8) partly extends into said housing (3), whereby the locking pin in the protruding position is inserted into a hole (15) in said drive shaft (14), whereby the bicycle in this protruding position of the locking pin (8) is locked as the bicycle cannot be operated by that shaft (14), **characterized by** the locking device being brought to a locked position by means of one of the alternatives:
a) the locking pin (8) is in the retracted position inside a locking sleeve (5) maintained in a unlocked position of the locking device, where the locking pin (8) is fixed by means of a number of code washers (6) holding the locking pin in the unlocked position, and where the locking device is brought to a locked position, when the code washers (6) are moved to a for each code washer predetermined position, where the locking pin is freely moveable in its axial direction in relation to the code washers (6), after which the locking pin (8) is shifted to a locked position by means of a locking control (7), a code key (13) with slats (12) which are arranged to bring code washers in said predetermined position to put the locking pin (8) in a neutral position, where the code washers cannot be put in said predetermined position without the code key (13)
b) the locking pin (8) is connected to a locking shaft (25) of a solenoid (16) in a locking sleeve (17) arranged at the end of the frame tube (1) connecting to the housing (3), where in a first variant the solenoid (16), when an electrical voltage is applied to it, has brought the locking pin to the locked position or unlocked position depending on the polarity of the voltage applied, and where in a second variant the locking pin (8) is arranged to be brought to the locked position by a compression spring (26) of the solenoid (16), which automatically pushes the locking pin (8) into the drive shaft's (14) hole (15), when a locking rod (30) of the locking sleeve is pressed, and in the other variant the locking pin (8) is arranged to be brought to the unlocked position by pulling the locking pin (8) out of the drive shaft (14) by pressing the locking rod (30) and applying a voltage to the solenoid, where the electric voltage to put the locking pin into locked or unlocked position is arranged to be executed by means of a coded electrical key (20).

2. The locking device according to claim 1, where the locking sleeve (5, 17) at either end has an end socket (25) connected to each part of the frame tube (1) for example through welding.

3. The locking device according to claim 2, where, according to alternative a) the code washers (6) are arranged inside and alongside each other along the locking sleeve (5), which is set up between two parties of the frame tube (1) at said housing (3), and where the code washers are arranged to be shiftable across the locking sleeve and fixable in a predetermined number of positions separated from each other by a selected distance; whereby the code washers (6) in their central part have a longitudinal hole (10) which is fitted with a circular extension forming a circular hole (11), where the circular holes (11) of the code washers (6) are offset longitudinally by said distance of the longitudinal holes (10).

4. The locking device according to claim 3, where the locking pin (8) is stored in the locking sleeve's (5) axial joint in the longitudinal holes (10) of the code washers (6), wherein the locking pin (8) is designed with transverse circular grooves (9) in which the code washers (6) can run across the locking pin by that the longitudinal holes (10) surround each of the locking pin's circular grooves (9) so that the code washers can be moved relative to the locking pin between the end positions of the longitudinal holes.

5. The locking device according to claim 4, where the code washers (6) are spring loaded so that they always return to a common starting position for each code washer when they are not pressed down with an applied force.

6. The locking device according to claim 5, where the locking pin (8) is set in a neutral position so that it can be moved axially in the locking sleeve (5) by means of a control (7) and thus pushed into the hole (15) of the drive shaft (14) when each code washer is pressed down to a predetermined position for each code washer according to a code specific to the bicycle lock, where according to the code each code washer is pressed down a distance determined according to the code.

7. The locking device according claim 2, where according to alternative b) in the first variant the locking pin (8) is stored axially inside a solenoid (16), which is arranged in the locking sleeve (16), and contacts with its one end the edge of the housing (3), when the bicycle lock is unlocked, and where at locked bicycle lock the solenoid (16) pulled the locking pin (8) in towards the housing (3), where the drive shaft (14) is located, and will thereby be positioned inserted with its said one end in one hole (15) in the drive shaft (14), so that the locking pin (8) locks the bicycle lock, so that the bicycle cannot be moved forward.

8. The locking device according to claim 7, where the locking sleeve (5) includes a microchip (18) and a first contacting member (19) to which an electrical key (20) can be connected, whereby the microchip (18) contains electronics for decoding of a code stored in the electrical key (20), whereby when the microchip (18) reads a code in the electrical key that matches a code, with which the microchip has been provided, for authorization for operating the bicycle lock, the microchip is arranged to apply a voltage from the electrical key (20) with a polarity set by the position of a switch (21) on the electricity key, wherein transmission of voltage from the microchip to the solenoid (16) is set up to be made by cables (22a), and where the code information from the electrical key (20) to the microchip (18) is made by cables (22b).

9. The locking device according claim 8, where the electrical key (20) has a battery (23) stored inside its housing.

10. The locking device according to claim 2, where according to alternative b) the locking sleeve (17) in the second variant contains a solenoid (16) with a therein stored locking shaft (26) to which the locking pin (8) is connected, where in the locked position the locking shaft (25) presses the locking pin (8) into the drive shaft (14) by a spring (26) set up to push the locking shaft out to an external position, where the locking pin pushes into one of the holes (15) in the drive shaft (14) of the bicycle, wherein the spring (26) is a compression spring arranged around the locking shaft's (26) front end, where it protrudes at a first end (27) of the solenoid.

11. The locking device according to claim 10, where at a second end (28) of the solenoid (16) the locking shaft (25) at its rear end is equipped with an end stop (29), and where a locking rod (30) contacts before the end stop (29) by the locking rod (30) being pressed by a locking spring (31) against the rear end of the locking shaft before the end stop (29), whereby the locking shaft cannot be carried outwards from the solenoid and inadvertently locking the bicycle by the end stop (29) not being able to be passed past the locking rod (30) without holding the locking rod pushed, where locking of the bicycle thus happens automatically by the locking rod (30) being pushed.

12. Method for unlocking the bicycle lock according to claim 11, **characterized by** the steps:
- the buckle rod (30) is pushed, whereby the locking shaft (25) is released from the locking rod (30),
- the electrical key (20) is inserted into a contact member (19) on the locking sleeve (17), whereby the solenoid is supplied with a voltage, so that the locking shaft (25) by magnetic force pulls back the locking pin (8) from the drive shaft (14) towards the solenoid, and
- the locking rod (30) is released so that it can be sprung back against the locking shaft (25) and thereby fixing the locking shaft (25) in the unlocked position with the end stop (29) preventing the locking shaft from being carried out of position, as the end stop contacts the locking shaft (25) inside the locking rod (30).

13. Method for locking or unlocking the bicycle lock according to claim 6, **characterized by** the steps:
- when locking, a code key (13) with slats (12) is attached to the code washers (6), so that they are pressed down at a distance determined by the length of each slat, whereby the locking pin (8) is put into neutral,
- the locking pin (8) is partially inserted into a hole (15) in the drive shaft (14) by means of the control (7), and
- when unlocking, the code key (13) with the slats (12) is put against the code washers (6), so that the code washers are pressed down by the distance determined by the lengths each of the slats, putting the locking pin in neutral position,
- the locking pin (8) is removed from the hole (15) in the drive shaft (14) by means of the control (7).
